# EUROPEAN PATENT APPLICATION

(11) **EP 3 396 489 A1**
(43) Date of publication of application: **31.10.2018**
(21) Application number: 18159436.7
(22) Date of filing: 01.03.2018
(51) Int. Cl.: G06F 1/32, G06K 9/00, G06F 3/0488, G06F 21/32

(54) **ELECTRONIC DEVICE, FINGERPRINT RECOGNITION CONTROL METHOD AND DEVICE**

(30) Priority: 28.04.2017 CN 201710293631
(71) Applicant: Guangdong OPPO Mobile Telecommunications Corp., Ltd., Guangdong 523860 (CN)
(72) Inventor: ZHANG, Haiping, Dongguan, Guangdong 523860 (CN)
(74) Representative: Romano, Giuseppe

(57) **Abstract**

Embodiments of the present disclosure provide an electronic device and a fingerprint recognition control method. The electronic device includes a processor, a touch display screen and a fingerprint recognition apparatus. A fingerprint recognition region of the fingerprint recognition apparatus includes the entire touch display screen. The touch display screen is configured to detect a vertical distance between a touch end and the touch display screen, and to determine a vertical projection point of the touch end on the touch display screen and send the vertical projection point to the processor when it is determined that the vertical distance is less than or equal to a preset distance threshold. The processor is configured to determine a target region corresponding to the vertical projection point on the touch display screen, and to enable a fingerprint recognition function of the fingerprint recognition apparatus in the target region.

## Description

### TECHNICAL FIELD

The present disclosure relates to an electronic device technology field, and more particularly relates to an electronic device, a fingerprint recognition control method and device.

### BACKGROUND

With the popularization of smart phones, the smart phones can support more and more applications and have increasingly powerful functions. The smart phones are developed towards diversification and individuation, thereby becoming an indispensable part in human's life. More and more researches show that a key for reducing system power consumption and improving effectiveness lies in how to run software and how to use the smart phones by users.

At present, the smart phone generally adopts a fingerprint authentication solution. A fingerprint recognition apparatus is typically set in an independent region of the smart phone, such as Home button at lower side of a screen or a rear cover of the phone. When an authentication is performed on the phone based on a fingerprint, the user needs to touch or press the fingerprint recognition region by the front side of a finger having the fingerprint, such that the fingerprint recognition apparatus may collect fingerprint data and finish the authentication when a fingerprint data matching succeeds.

### SUMMARY

A first aspect of embodiments of the present disclosure provides an electronic device. The electronic device includes a processor, a touch display screen and a fingerprint recognition apparatus. The fingerprint recognition region of the fingerprint recognition apparatus includes the entire touch display screen. The touch display screen is configured to detect a vertical distance between a touch end and the touch display screen. The touch display screen is further configured to determine a vertical projection point of the touch end on the touch display screen and send the vertical projection point to the processor when it is determined that the vertical distance is less than or equal to a preset distance threshold. The processor is configured to determine a target region corresponding to the vertical projection point on the touch display screen. The processor is further configured to enable a fingerprint recognition function of the fingerprint recognition apparatus in the target region.

In at least one embodiment, the processor is further configured to highlight the target region.

In at least one embodiment, the processor is configured to determine the vertical projection point of the touch end on the touch display screen when a period in which the vertical distance between the touch end and the touch display screen is maintained less than or equal to the preset distance threshold is greater than or equal to a preset period.

In at least one embodiment, the processor is configured to: acquire first brightness of the touch display screen; and set brightness of the target region as second brightness according to the first brightness, in which the second brightness is brighter than the first brightness, and the target region having the second brightness is configured to guide a user to input the fingerprint.

In at least one embodiment, the processor is configured to display a man-machine interface in the target region, in which the man-machine interface is configured to guide the user to input the fingerprint in the target region.

In at least one embodiment, the fingerprint recognition apparatus is configured to collect fingerprint data and to send the fingerprint data to the processor, and the processor is further configured to perform a matching between the fingerprint data collected and pre-stored fingerprint template data, and to perform a preset operation when the collected fingerprint data matches with the pre-stored fingerprint template data.

A second aspect of embodiments of the present disclosure provides a fingerprint recognition control method. The method is applied to an electronic device including a touch display screen and a fingerprint recognition apparatus. The fingerprint recognition region of the fingerprint recognition apparatus includes the entire touch display screen. The method includes: detecting a vertical distance between a touch end and the touch display screen; determining a vertical projection point of the touch end on the touch display screen when it is determined that the vertical distance is less than or equal to a preset distance threshold; determining a target region corresponding to the vertical projection point on the touch display screen; and enabling a fingerprint recognition function of the fingerprint recognition apparatus in the target region.

In at least one embodiment, the method further includes highlighting the target region.

In at least one embodiment, determining the vertical projection point of the touch end on the touch display screen includes: when a period in which the vertical distance between the touch end and the touch display screen is maintained less than or equal to the preset distance threshold is greater than or equal to a preset period, determining the vertical projection point of the touch end on the touch display screen.

In at least one embodiment, highlighting the target region includes: acquiring first brightness of the touch display screen; and setting brightness of the target region as second brightness according to the first brightness, in which the second brightness is brighter than the first brightness, and the target region having the second brightness is configured to guide a user to input the fingerprint.

In at least one embodiment, highlighting the target region includes: displaying a man-machine interface in the target region, in which the man-machine interface is configured to guide the user to input the fingerprint in the target region.

In at least one embodiment, the method further includes: controlling the fingerprint recognition apparatus to collect fingerprint data; and performing a matching between the fingerprint data collected and pre-stored fingerprint template data, and performing a preset operation when the collected fingerprint data matches with the pre-stored fingerprint template data.

A third aspect of embodiments of the present disclosure provides a fingerprint recognition control device. The device is applied to an electronic device including a touch display screen and a fingerprint recognition apparatus. The fingerprint recognition region of the fingerprint recognition apparatus includes the entire touch display screen. The device includes: an acquiring unit, configured to detect a vertical distance between a touch end and the touch display screen; a determining unit, configured to determine a vertical projection point of the touch end on the touch display screen when the vertical distance is less than or equal to a preset distance threshold, and to determine a target region corresponding to the vertical projection point on the touch display screen; and an enabling unit, configured to enable a fingerprint recognition function of the fingerprint recognition apparatus in the target region.

A fourth aspect of embodiments of the present disclosure provides a computer readable storage medium stored thereon with computer programs for exchanging electronic data, in which the computer programs are configured to cause a computer to perform all or a part of acts of the method according to the second aspect of embodiments of the present disclosure.

A fifth aspect of embodiments of the present disclosure provides a computer program product including a non-transitory computer-readable medium stored with computer programs, in which the computer programs are executable to cause the computer to perform all or a part of acts of the method according to the second aspect of embodiments of the present disclosure. The computer program product may be a program installation package.

With the technical solutions provided by embodiments of the present disclosure, when the electronic detects an approaching operation at the touch end, the fingerprint recognition function of the fingerprint recognition apparatus in the projection region corresponding to the approaching operation is enabled in advance, thus improving the speed of fingerprint recording of the electronic device. Moreover, since the electronic device does not need to enable the fingerprint recognition function of the entire touch display screen, and only needs to enable the fingerprint recognition function of the corresponding projection region according to the approaching operation of the user's finger, power consumption of the electronic device is reduced.

### BRIEF DESCRIPTION OF THE DRAWINGS

In order to make the technical solutions of embodiments of the present disclosure more clearly, the accompanying drawings used in the description of embodiments of the present disclosure are briefly described hereunder. Obviously, the described drawings are merely some embodiments of present disclosure. For those skilled in the art, other drawings may be obtained based on these drawings without any creative work.
Fig. 1 is a schematic diagram of an electronic device according to an embodiment of the present disclosure.
Fig. 2 is a flow chart of a fingerprint recognition control method according to an embodiment of the present disclosure.
Fig. 3 is a schematic diagram of an electronic device according to an embodiment of the present disclosure.
Fig. 4 is a flow chart of a fingerprint recognition control method according to another embodiment of the present disclosure.
Fig. 5 is a block diagram of an electronic device according to an embodiment of the present disclosure.
Fig. 6 is a block diagram of a fingerprint recognition control device according to an embodiment of the present disclosure.
Fig. 7 is a block diagram of a fingerprint recognition control device according to an embodiment of the present disclosure.
Fig. 8 is a block diagram of a fingerprint recognition control device according to an embodiment of the present disclosure.
Fig. 9 is a schematic diagram of an electronic device according to an embodiment of the present disclosure.

### DETAILED DESCRIPTION

In order to make those skilled in the art better understand solutions of the present disclosure, the technical solutions in embodiments of the present disclosure are hereinafter described clearly and completely with reference to accompanying drawings in embodiments of the present disclosure. Apparently, embodiments described are a part of embodiments of the present disclosure, but not all embodiments. All other embodiments obtained by those skilled in the art based on the embodiments in the present disclosure without creative labor shall fall in the protection scope of the present disclosure.

Terms such as "first", "second" and the like used in the specification, in claims and in drawings are configured herein for distinguishing different subjects, but not for showing a particular sequence. Furthermore, the terms such as "include", "comprise" and any other variations thereof are intended to be non-exclusive. For example, a process, a method, a system, a product or a device including or comprising a sequence of blocks or units is not limited to include or comprise the listed blocks or unit, instead, they alternatively further include or comprise other blocks and units that are not listed or alternatively further include inherent blocks or units of the process, the method, the system, the product or the device.

Term such as "embodiments" in the present disclosure means that, particular features, structures and characteristics described in combination with embodiments may be covered in at least one embodiment of the present disclosure. Usages of the term for many times in the specification are not necessary to refer to a same embodiment or same embodiments, and they are not independent embodiments mutually exclusive with other embodiments or unimportant embodiments. It may be explicitly or implicitly understood by those skilled in the art that, embodiments described herein can be combined with other embodiments.

The electronic device described in embodiments of the present disclosure may include various devices having a wireless communication function, such as a mobile terminal, a portable device, a vehicle-mounted device, a wearable device, a computing device or other processing devices coupled to a wireless modem, and various forms of user equipment (UE), mobile stations (MS), terminal devices and the like. For ease of description, the above-mentioned devices are collectively referred to as electronic device. Embodiments of the present disclosure will be described in detail hereinafter.

In order to have a better understanding of the electronic device, the fingerprint recognition control method and device provided by embodiments of the present disclosure, embodiments of the present disclosure are described in detail hereinafter.

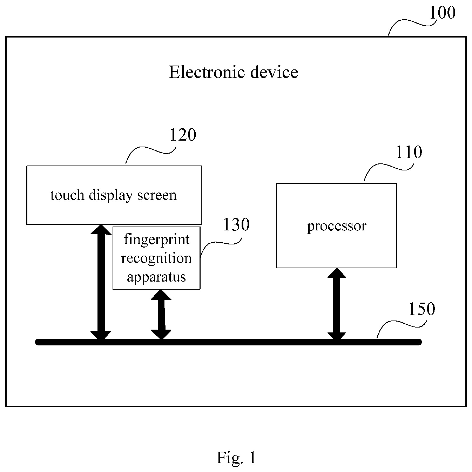

Referring to Fig. 1, which is a schematic diagram of an electronic device 100 according to an embodiment of the present disclosure, the electronic device 100 includes a processor 110, a touch display screen 120 and a fingerprint recognition apparatus 130. The fingerprint recognition apparatus 130 is coupled to the touch display screen 120, and a fingerprint recognition region of the fingerprint recognition apparatus 130 includes the entire touch display screen 120. The processor 110 is coupled to the touch display screen 120 and the fingerprint recognition apparatus 130 via a bus 150.

The touch display screen 120 is configured to detect a vertical distance between a touch end and the touch display screen. The touch display screen 120 is further configured to determine a vertical projection point of the touch end on the touch display screen and send the vertical projection point to the processor when it is determined that the vertical distance is less than or equal to a preset distance threshold. The processor 110 is configured to determine a target region corresponding to the vertical projection point on the touch display screen. The processor 110 is further configured to enable a fingerprint recognition function of the fingerprint recognition apparatus in the target region.

It can be seen that, in embodiments of the present disclosure, the fingerprint recognition region of the fingerprint recognition apparatus in the electronic device includes the entire touch display screen. The touch display screen of the electronic device detects the vertical distance between the touch end and the touch display screen. When it is determined that the vertical distance is less than or equal to the preset distance threshold, the touch display screen determines the vertical projection point of the touch end on the touch display screen, and sends the vertical projection point to the processor. The processor determines the target region corresponding to the vertical projection point on the touch display screen, and enables the fingerprint recognition function of the fingerprint recognition apparatus in the target region. Therefore, when the electronic device detects an approaching operation at the touch end, the fingerprint recognition function of the fingerprint recognition apparatus in the projection region corresponding to the approaching operation is enabled in advance, thus improving the speed of fingerprint recording of the electronic device. The electronic device may enable the fingerprint recognition function of the fingerprint recognition apparatus in the target region when the user's finger approaches the touch display screen. The electronic device does not need to wait for the user's finger to touch the touch display screen or press the Home button. Thus, the speed of fingerprint recording of the electronic device is enhanced. Moreover, since the electronic device does not need to enable the fingerprint recognition function of the entire touch display screen, and only needs to enable the fingerprint recognition function of the corresponding projection region according to the approaching operation of the user's finger, power consumption of the electronic device is reduced.

In some possible implementations, the processor 110 is further configured to highlight the target region.

Therefore, in an embodiment, after the fingerprint recognition function of the fingerprint recognition apparatus in the target region is enabled through the processor, the electronic device may highlight the target region, such that the user is guided to input the fingerprint, thereby improving the speed for fingerprint recording.

In some possible implementations, the processor 110 is configured to determine the target region corresponding to the vertical projection point on the touch display screen as follows. The processor 110 determines the vertical projection point of the touch end on the touch display screen when determining that a period in which the vertical distance between the touch end and the touch display screen is maintained less than or equal to the preset distance threshold is greater than or equal to a preset period. For example, the preset period may be 3 seconds. When the vertical distance between the touch end and the touch display screen is maintained less than or equal to the preset distance for more than 3 seconds, the processor 110 determines the vertical projection point of the touch end on the touch display screen.

Therefore, in an embodiment, when the vertical distance is less than or equal to the preset distance threshold, and when the period in which the vertical distance between the touch end and the touch display screen is maintained less than or equal to the preset distance threshold is greater than or equal to the preset period, the electronic device performs operations of controlling the touch display screen to determine the vertical projection point of the touch terminal on the touch display screen. Thus, it is beneficial to avoid user's misoperation and reduce the power consumption of the electronic device.

In some possible implementations, the processor 110 is configured to highlight the target region as follows. In detail, the processor 110 is configured to acquire first brightness of the touch display screen, and to set brightness of the target region as second brightness according to the first brightness. The second brightness is brighter than the first brightness, and the target region having the second brightness is configured to guide a user to input the fingerprint. Alternatively, the processor 110 is configured to display a man-machine interface in the target region, in which the man-machine interface is configured to guide the user to input the fingerprint in the target region.

In some possible implementations, the fingerprint recognition apparatus 130 is configured to collect fingerprint data and send the fingerprint data to the processor 110. The processor 110 is further configured to perform a matching between the fingerprint data collected and pre-stored fingerprint template data, and to perform a preset operation when the collected fingerprint data matches with the pre-stored fingerprint template data.

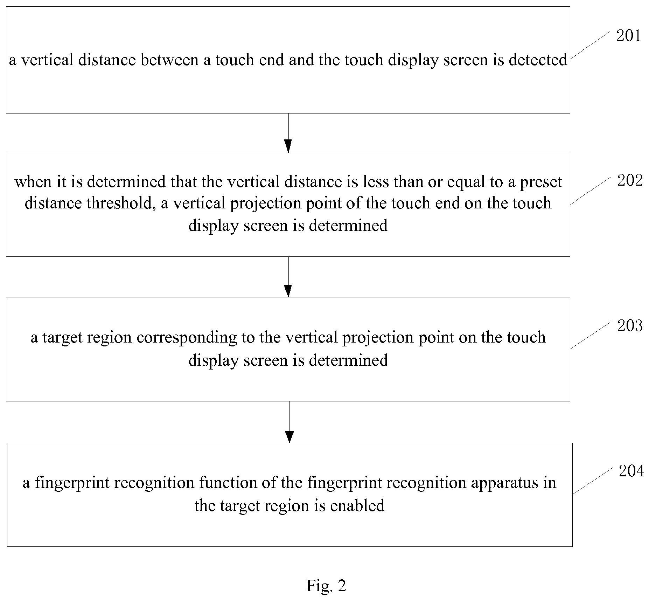

Fig. 2 is a flow chart of a fingerprint recognition control method according to an embodiment of the present disclosure. The method is applied to an electronic device including a touch display screen and a fingerprint recognition apparatus, and a fingerprint recognition region of the fingerprint recognition apparatus includes the entire touch display screen. As illustrated in Fig. 2, the fingerprint recognition control method according to embodiments of the present disclosure may include followings.

At block 201, a vertical distance between a touch end and the touch display screen is detected.

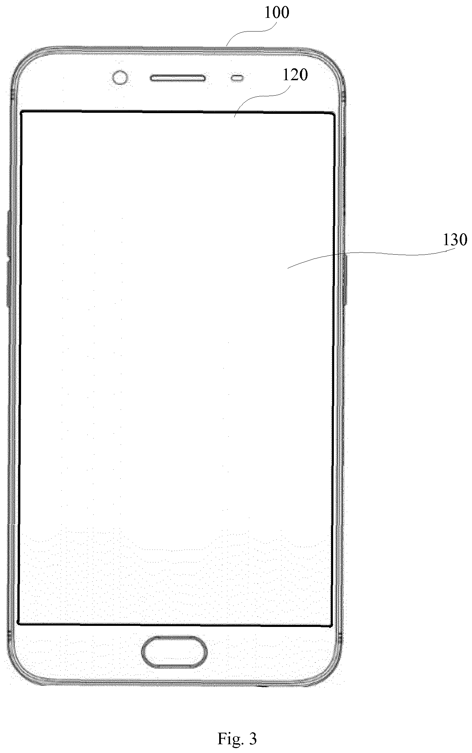

As illustrated in Fig. 3, the electronic device 100 includes the touch display screen 120 and the fingerprint recognition apparatus 130. The fingerprint recognition region of the fingerprint recognition apparatus 130 of the electronic device 100 includes the entire touch display screen 120.

In some possible embodiments, the touch display screen 120 may include a touch screen and a display screen, the touch screen and the display screen are arranged in a stack and the display screen is located underneath the touch screen. The fingerprint recognition apparatus 130 includes a fingerprint sensor, and the fingerprint sensor may include at least one of an optical fingerprint sensor, a capacitive fingerprint sensor and an ultrasonic fingerprint sensor.

In a case that the fingerprint sensor is the capacitive fingerprint sensor and the touch screen included in the touch display screen is a capacitive screen, the fingerprint recognition apparatus may be coupled to the touch display screen in following manner: the fingerprint recognition apparatus is integrated to the touch display screen. In an embodiment, a first induction capacitor array in the fingerprint recognition apparatus may be embedded in a second induction capacitor array in the touch display screen, and induction capacitors in the first induction capacitor array are distributed uniformly in the first region.

In a case that the fingerprint sensor is the optical fingerprint sensor, the fingerprint recognition apparatus may be coupled to the touch display screen in following manner: the fingerprint recognition apparatus is integrated to the touch display screen, the fingerprint recognition apparatus in the electronic device may collect users' fingerprint data based on a pinhole imaging principle. A spacer layer between the touch screen and the display screen included in the touch display screen is provided with a first pinhole array layer at a first preset region. A uniformly-distributed pinhole array is formed at a second preset region when a drive circuit layer of the display screen is printed. The pinhole array uniformly distributed on the drive circuit layer is regarded as a second pinhole array layer, and pinholes of the first pinhole array layer have a one-to-one correspondence with those of the second pinhole array layer. The optical fingerprint sensor may include a charge coupled device (CCD) array layer configured to detect light passing through the first pinhole array layer and the second pinhole array layer. The first preset region and the second preset region correspond to the first region respectively.

In a case that the fingerprint sensor is the ultrasonic fingerprint sensor, the fingerprint recognition apparatus may be coupled to the touch display screen in following manner: a vacuum detecting cavity is set below the first region of the touch display screen, a plurality of ultrasonic sensors are distributed uniformly in the vacuum detecting cavity. The ultrasonic sensor includes an ultrasonic signal transmitter and an ultrasonic signal receiver. The ultrasonic signal transmitter is configured to transmit signal at a certain frequency to detect the user's fingerprint, and the ultrasonic signal receiver is configured to receive an echo signal reflected. An operating principle of the ultrasonic sensor is explained as follows, by using a capacity of penetrating materials of ultrasonic waves, different echo signals may be generated according to different materials, for example, when the ultrasonic wave reaches surfaces of different materials, the ultrasonic wave may be absorbed and reflected to different extents, such that positions of ridge and valley of fingerprint may be detected.

The display screen may be a thin film transistor-liquid crystal display (TFT-LCD), a light emitting diode (LED) display, an organic light-emitting diode (OLED) display and the like.

At block 202, when it is determined that the vertical distance is less than or equal to a preset distance threshold, a vertical projection point of the touch end on the touch display screen is determined.

At block 203, a target region corresponding to the vertical projection point on the touch display screen is determined.

The target region may be a circular region with the vertical projection point as a center and a preset length as a radius, or the target region may be a square region with the vertical projection point as a center and a preset length as a side. The target region may also be regions of other shapes, which is not limited in embodiments of the present disclosure. The area of the target region is greater than a preset threshold. The preset threshold may be a contact area between a user's finger and the touch display screen when the user inputs the fingerprint.

At block 204, a fingerprint recognition function of the fingerprint recognition apparatus in the target region in enabled.

In a case that the fingerprint sensor is the capacitive fingerprint sensor and the touch screen included in the touch display screen is a capacitive screen, the induction capacitor array of the fingerprint recognition apparatus in the target region may be enabled by the electronic device, such that the fingerprint recognition function of the fingerprint recognition apparatus in the target region is enabled.

In a case that the fingerprint sensor is the optical fingerprint sensor, the electronic device may enable a charge coupled device (CCD) array layer of the optical fingerprint sensor in the target region, so as to detect light passing through the first pinhole array layer and the second pinhole array layer in the target region, thereby enabling the fingerprint recognition function of the fingerprint recognition apparatus in the target region.

In a case that the fingerprint sensor is the ultrasonic fingerprint sensor, the electronic device may enable an ultrasonic sensor in the vacuum detecting cavity set below the target region, thereby enabling the fingerprint recognition function of the fingerprint recognition apparatus in the target region.

Therefore, when the electronic device detects an approaching operation at the touch end, the fingerprint recognition function of the fingerprint recognition apparatus in the projection region corresponding to the approaching operation is enabled in advance, thus improving the speed of fingerprint recording of the electronic device. Moreover, since the electronic device does not need to enable the fingerprint recognition function of the entire touch display screen, and only needs to enable the fingerprint recognition function of the corresponding projection region according to the approaching operation of the user's finger, power consumption of the electronic device is reduced.

In some possible embodiments, the method further includes followings. The target region is highlighted.

Therefore, in an embodiment, after the fingerprint recognition function of the fingerprint recognition apparatus in the target region is enabled through the processor, the electronic device may highlight the target region, such that the user is guided to input the fingerprint, thereby improving the speed of the fingerprint recording.

In some possible implementations, the vertical projection point of the touch end on the touch display screen may be determined as follows. The vertical projection point of the touch end on the touch display screen is determined when it is determined that a period in which the vertical distance between the touch end and the touch display screen is maintained less than or equal to the preset distance threshold is greater than or equal to a preset period.

Therefore, in this embodiment, when it is determined that the vertical distance is less than or equal to the preset distance threshold, and when it is determined that the period in which the vertical distance between the touch end and the touch display screen is maintained less than or equal to the preset distance threshold is greater than or equal to the preset period, the electronic device performs operations of controlling the touch display screen to determine the vertical projection point of the touch terminal on the touch display screen. Thus, it is beneficial to avoid the user's misoperation and reduce the power consumption of the electronic device.

In some possible implementations, the target region is highlighted as follows. The electronic device acquires first brightness of the touch display screen and sets brightness of the target region as second brightness according to the first brightness. The second brightness is brighter than the first brightness, and the target region having the second brightness is configured to guide a user to input the fingerprint. Alternatively, the electronic device displays a man-machine interface in the target region, in which the man-machine interface is configured to guide the user to input the fingerprint in the target region.

In some possible implementations, the method further includes follows. The electronic device controls the fingerprint recognition apparatus to collect fingerprint data. The electronic device performs a matching between the fingerprint data collected and pre-stored fingerprint template data, and performs a preset operation when the collected fingerprint data matches with the pre-stored fingerprint template data.

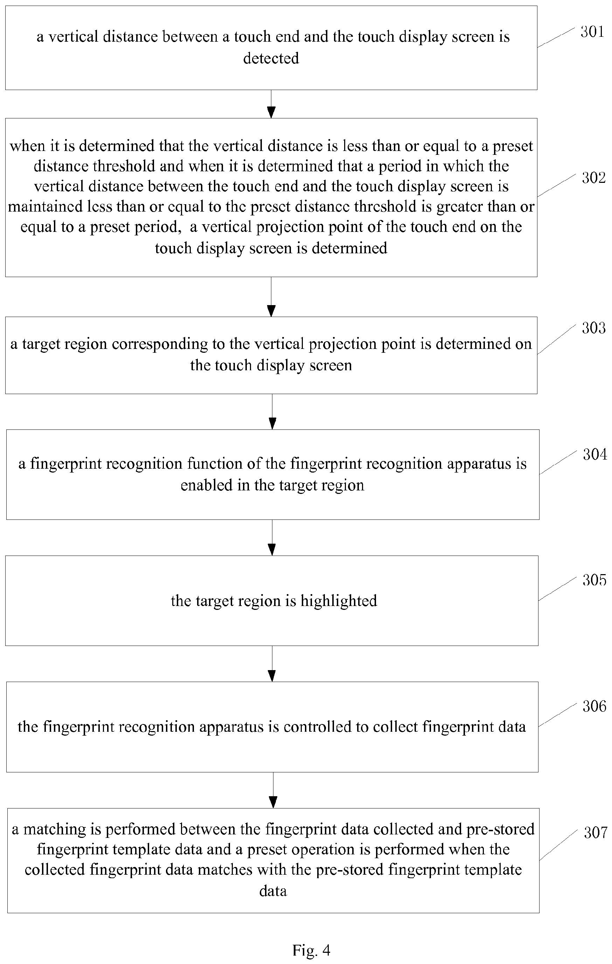

Fig. 4 is a flow chart of a fingerprint recognition control method according to another embodiment of the present disclosure. Similarly, the fingerprint recognition control method according to another embodiment of the present disclosure may be applied to an electronic device including a touch display screen and a fingerprint recognition apparatus, and a fingerprint recognition region of the fingerprint recognition apparatus includes the entire touch display screen. As illustrated in Fig. 4, the fingerprint recognition control method according to embodiments of the present disclosure may include followings.

At block 301, a vertical distance between a touch end and the touch display screen is detected.

At block 302, when it is determined that the vertical distance is less than or equal to a preset distance threshold and when it is determined that a period in which the vertical distance between the touch end and the touch display screen is maintained less than or equal to the preset distance threshold is greater than or equal to a preset period, a vertical projection point of the touch end on the touch display screen is determined.

At block 303, a target region corresponding to the vertical projection point on the touch display screen is determined.

At block 304, a fingerprint recognition function of the fingerprint recognition apparatus in the target region is enabled.

At block 305, the target region is highlighted.

In detail, the electronic device may highlight the target region as follows. The electronic device acquires first brightness of the touch display screen, and the electronic device sets brightness of the target region as second brightness according to the first brightness. The second brightness is brighter than the first brightness, and the target region having the second brightness is configured to guide a user to input the fingerprint. Alternatively, the electronic device may display a man-machine interface in the target region, in which the man-machine interface is configured to guide the user to input the fingerprint in the target region.

At block 306, the fingerprint recognition apparatus is controlled to collect fingerprint data.

At block 307, a matching is performed between the fingerprint data collected and pre-stored fingerprint template data and a preset operation is performed when the collected fingerprint data matches with the pre-stored fingerprint template data through the processor.

Therefore, when the electronic device detects an approaching operation at the touch end, the fingerprint recognition function of the fingerprint recognition apparatus in the projection region corresponding to the approaching operation is enabled in advance, thus improving the speed of fingerprint recording of the electronic device. Moreover, since the electronic device does not need to enable the fingerprint recognition function of the entire touch display screen, and only needs to enable the fingerprint recognition function of the corresponding projection region according to the approaching operation of the user's finger, power consumption of the electronic device is reduced.

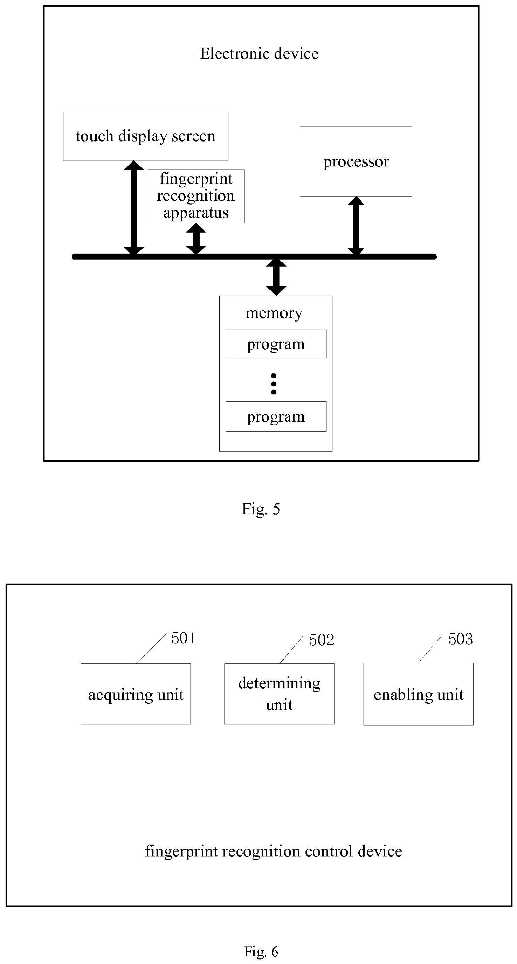

Fig. 5 is a schematic diagram of an electronic device according to an embodiment of the present disclosure. As illustrated in Fig. 5, the electronic device includes a processor, a touch display screen, a fingerprint recognition apparatus, a memory and one or more programs. A fingerprint recognition region of the fingerprint recognition apparatus includes the entire touch display screen. The one or more programs are stored in the memory and are configured to be executed by the processor. The one or more programs include instructions for performing following acts: controlling the touch display screen to detect a vertical distance between a touch end and the touch display screen; controlling the touch display screen to determine a vertical projection point of the touch end on the touch display screen and send the vertical projection point to the processor when it is determined that the vertical distance is less than or equal to a preset distance threshold; determining a target region corresponding to the vertical projection point on the touch display screen by the processor; and enabling a fingerprint recognition function of the fingerprint recognition apparatus in the target region by the processor.

In some possible implementations, the one or more programs further include instructions for performing following acts: highlighting the target region by the processor.

In some possible implementations, the instructions are further configured to perform following acts to determine the vertical projection point of the touch end on the touch display screen: controlling the touch display screen to determine the vertical projection point of the touch end on the touch display screen when it is determined that a period in which the vertical distance between the touch end and the touch display screen is maintained less than or equal to the preset distance threshold is greater than or equal to a preset period.

In some possible implementations, the instructions are further configured to perform following acts to highlight the target region by the processor: acquiring first brightness of the touch display screen by the processor; and according to the first brightness, setting brightness of the target region as second brightness by the processor. The second brightness is brighter than the first brightness, and the target region having the second brightness is configured to guide a user to input the fingerprint. Alternatively, the instructions are further configured to perform following acts to highlight the target region by the processor: displaying a man-machine interface in the target region by the processor, in which the man-machine interface is configured to guide the user to input the fingerprint in the target region.

Therefore, when the electronic device detects an approaching operation at the touch end, the fingerprint recognition function of the fingerprint recognition apparatus in the projection region corresponding to the approaching operation is enabled in advance, thus improving the speed for fingerprint recording of the electronic device. Moreover, since the electronic device does not need to enable the fingerprint recognition function of the entire touch display screen, and only needs to enable the fingerprint recognition function of the corresponding projection region according to the approaching operation of the user's finger, power consumption of the electronic device is reduced.

Fig. 6 is a block diagram of a fingerprint recognition control device according to an embodiment of the present disclosure. The device is applied to an electronic device including a touch display screen and a fingerprint recognition apparatus. A fingerprint recognition region of the fingerprint recognition apparatus includes the entire touch display screen. As illustrated in Fig. 6, the device may include a non-transitory computer-readable medium including computer executable instructions stored thereon, and an instruction execution system which is configured by the instructions to implement at least one of an acquiring unit 501, a determining unit 502 and an enabling unit 503.

The acquiring unit 501 is configured to detect a vertical distance between a touch end and the touch display screen.

The determining unit 502 is configured to determine a vertical projection point of the touch end on the touch display screen when it is determined that the vertical distance is less than or equal to a preset distance threshold.

The determining unit 502 is further configured to determine a target region corresponding to the vertical projection point on the touch display screen.

The enabling unit 503 is configured to enable a fingerprint recognition function of the fingerprint recognition apparatus in the target region.

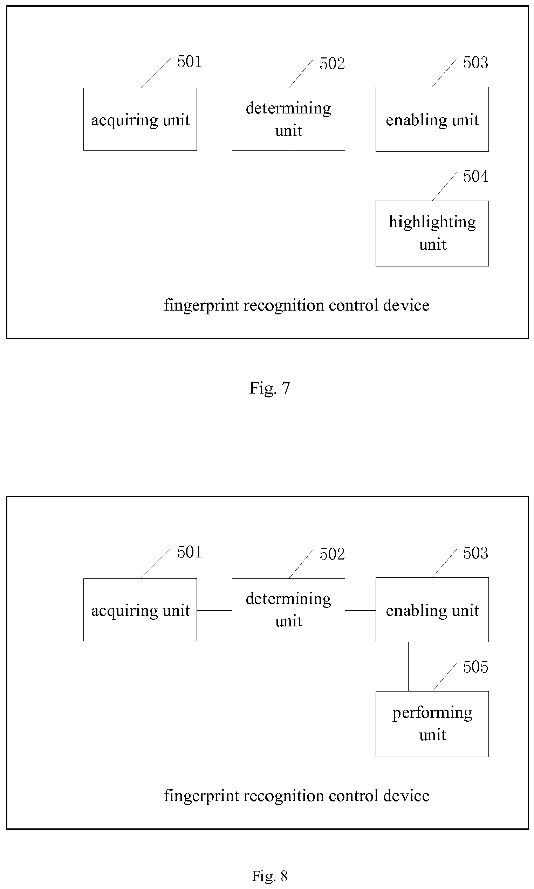

In some possible embodiments, the instruction execution system is further configured by the instructions to implement a highlighting unit 504, as illustrated in Fig. 7. The highlighting unit 504 is configured to highlight the target region.

In some possible embodiments, the determining unit 502 is configured to determine the vertical projection point of the touch end on the touch display screen when it is determined that the vertical distance is less than or equal to a preset distance threshold and when it is determined that a period in which the vertical distance between the touch end and the touch display screen is maintained less than or equal to the preset distance threshold is greater than or equal to a preset period.

In some possible embodiments, the highlighting unit 504 is configured to acquire first brightness of the touch display screen; and to set brightness of the target region as second brightness according to the first brightness. The second brightness is brighter than the first brightness, and the target region having the second brightness is configured to guide a user to input the fingerprint. Alternatively, the highlighting unit 504 is configured to display a man-machine interface in the target region, in which the man-machine interface is configured to guide the user to input the fingerprint in the target region.

In some possible implementations, the instruction execution system is further configured by the instructions to implement a performing unit 505, as illustrated in Fig. 8. The fingerprint recognition apparatus is configured to collect fingerprint data. The performing unit 505 is configured to perform a matching between the fingerprint data collected and pre-stored fingerprint template data and perform a preset operation when the collected fingerprint data matches with the pre-stored fingerprint template data.

Regarding specific implementations of the above-mentioned units, reference may be made to the description of relative acts in embodiments corresponding to Fig. 2 and Fig. 4, which will not described in detail here.

It should be noted that the electronic device described in embodiments of the present disclosure may be represented in a form of a functional unit. The term "unit" used herein should be understood with a broadest meaning, and objects configured to realize functions of each "unit" may be, for example, an integrated circuit ASIC, a single circuit, a processor (a common processor or a specialized processor or a chipset) configured to execute one or more software programs or firmware programs and memory, a combinational logic circuit and/or other suitable components for realizing above functions.

For example, the function of the acquiring unit 501 for detecting a vertical distance between a touch end and the touch display screen may be realized by the electronic device illustrated in Fig. 5. In detail, it may be realized by the processor calling executable program codes stored in the memory, so as to control the touch display screen to detect a vertical distance between a touch end and the touch display screen.

Therefore, when the electronic device detects an approaching operation at the touch end, the fingerprint recognition function of the fingerprint recognition apparatus in the projection region corresponding to the approaching operation is enabled in advance, thus improving the speed of fingerprint recording of the electronic device. Moreover, since the electronic device does not need to enable the fingerprint recognition function of the entire touch display screen, and only needs to enable the fingerprint recognition function of the corresponding projection region according to the approaching operation of the user's finger, power consumption of the electronic device is reduced.

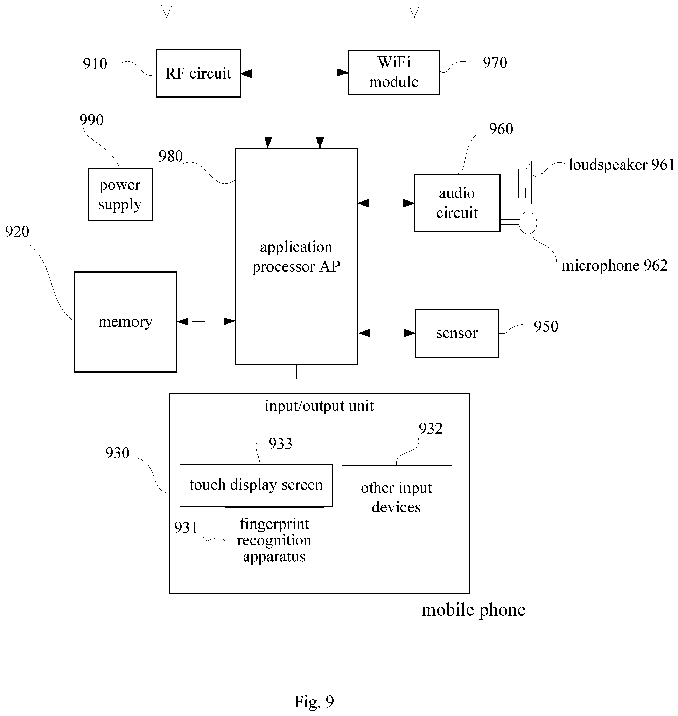

Embodiments of the present disclosure also provide another electronic device, as illustrated in Fig. 9. For convenience of description, only parts relative with embodiments of the present disclosure are illustrated, regarding specific technical details which are not disclosed, reference can be made to the description of the method embodiments. The electronic device may include a mobile phone, a tablet computer, a PDA (Personal Digital Assistant), a POS (Point of Sales), a vehicle-mounted computer and the like. The present disclosure takes the mobile phone as an example.

Fig. 9 illustrates a schematic diagram of a mobile phone relative to the electronic device provided by embodiments of the present disclosure. Referring to Fig. 9, the mobile phone may include a radio frequency (RF) circuit 910, a memory 920, an input unit 930, a sensor 950, an audio circuit 960, a wireless fidelity (WiFi) module 970, an application processor (AP) 980, and a power supply 990. It will be understood by those skilled in the art that the terminal structure illustrated in Fig. 6 does not constitute a limitation on the mobile phone. Compared to the drawing illustrated, more or fewer components may be included, and a combination of some components or different component arrangements may also be possible.

Respective components of the mobile phone will be described in detail with reference to Fig. 6.

The input unit 930 may be configured to receive input digital or character information, and generate key signal input relative to user's setting and functional control of the mobile phone. Specifically, the input unit 930 may include a touch display screen 933, a fingerprint recognition apparatus 931 and other input devices 932. The fingerprint recognition apparatus 931 is coupled to the touch display screen 933, and a fingerprint recognition region of the fingerprint recognition apparatus 931 includes the entire touch display screen 933. The input unit 930 may also include other input devices 932. In detail, other input devices 932 may include but not be limited to one or more of a physical button, a functional button (such as a volume control button, an ON-OFF button and the like), a trackball, a mouse and a joystick.

The AP 980 is a control center of the mobile phone, configured to use various interfaces and wiles to couple respective parts of the mobile phone, to perform various functions and process data of the mobile phone by running or executing software programs and/or modules stored in the memory 920 and calling data stored in the memory 920, so as to monitor the mobile phone overall. In an embodiment, the AP 980 may include one or more processing units. For example, the AP 980 may integrate an application processor and a modem processor, in which the application processor is mainly configured to process the operating system, the user interface and applications, and the modem processor is mainly configured to process wireless communication. It could be understood that the above-described modem processor may be not integrated in the AP 980.

The memory 920 may be configured to store Android system and a screen locking application. The Android system includes a FingerService and a power management service (PSM). In addition, the memory 920 may include a high-speed random access memory, and may also include a non-transitory medium, such as at least one disk storage element, a flash storage element or other transitory solid state storage element.

The RF circuit 910 may be configured to receive and send information. Generally, the radio frequency circuit 910 includes, but is not limited to, an antenna, at least one amplifier, a transceiver, a coupler, a low noise amplifier (LNA), and a duplexer. In addition, the radio frequency circuit 910 may also communicate with another device by wireless communication and a network. The wireless communication may use any communication standard or protocol, which includes, but is not limited to, Global System for Mobile communications (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like.

The mobile phone may also include at least one sensor 950, such as an optical sensor, a motion sensor, and other sensors. In detail, the optical sensor may include an ambient light sensor and a proximity sensor. The ambient light sensor can adjust luminance of the touch display screen according to brightness of the ambient light. The proximity sensor may switch off the touch display screen and/or backlight when the mobile phone is moved to the ear. As one type of motion sensor, an accelerometer sensor may be enumerated. The accelerometer sensor can detect magnitude of accelerations in various directions (generally on three axes), may detect magnitude and a direction of the gravity in a static state, and may be applied to an application that recognizes the attitude of the mobile phone (for example, switching between landscape orientation and portrait orientation, a related game, and magnetometer attitude calibration) and a function related to vibration recognition (such as a pedometer and a knock), and the like. Other sensors, such as a gyroscope, a barometer, a hygrometer, a thermometer, and an infrared sensor can be configured in the mobile phone, which are not further described herein.

The audio circuit 960, a loudspeaker 960, and a microphone 962 may provide audio interfaces between the user and the mobile phone. The audio circuit 960 may convert received audio data into an electric signal and transmit the electric signal to the loudspeaker 961. The loudspeaker 961 converts the electric signal into a sound signal for outputting. On the other hand, the microphone 962 converts a collected sound signal into an electric signal. The audio circuit 960 receives the electric signal and converts the electric signal into audio data, and outputs the audio data to the AP 980 for processing. Then, the processor sends the audio data to, for example, another terminal device by using the radio frequency circuit 910, or outputs the audio data to the memory 920 for further processing.

WiFi is a short distance wireless transmission technology. The mobile phone may help, by using the WiFi module 970, the user to receive and send e-mails, browse a webpage, access streaming media, and so on, which provides wireless broadband Internet access for the user. Although the WiFi module 970 is illustrated in Fig. 6, it could be understood that the WiFi module is unessential and may be omitted when required, as long as the scope of the essence of the present disclosure is not changed.

The mobile phone further includes the power supply (such as a battery) 990 for supplying power to the components. The power supply may be logically coupled with the AP 980 by using a power management system, thereby implementing functions such as charging, discharging and power consumption management by using the power management system.

Although not illustrated in the figure, the mobile phone may further include a camera, a Bluetooth module, and the like, which is not further described herein.

In aforementioned embodiments of Fig. 2 and Fig. 3, method steps may be realized based on the structure of the mobile phone.

In aforementioned embodiments of Fig. 5, functions of the units may be realized based on the structure of the mobile phone.

Embodiments of the present disclosure also provide a computer readable storage medium having computer programs for exchanging digital data stored thereon, in which the computer programs are executed to cause a computer to perform all or a part of acts of the fingerprint recognition control method according to the method embodiments of the present disclosure.

Embodiments of the present disclosure also provide a computer program product including a non-transitory computer-readable medium storing computer programs, in which the computer programs are executed to cause a computer to perform all or a part of acts of the fingerprint recognition control method according to the method embodiments of the present disclosure.

It should be noted that, for convenience and simplicity of description, the above method embodiments are described in a form of a combination of a series of steps. However, those skilled in the art can understand clearly that, the present disclosure is not limited by the order of the steps, since some steps according to present disclosure may be performed simultaneously or in other orders. In addition, those skilled in the art can understand clearly that, the described embodiments are preferred embodiments, of which relative steps or modules may be unnecessary for the present disclosure.

In above embodiments, each embodiment may be described focusing on different aspects. Regarding parts not be described in some embodiments, reference may be made to relative descriptions in other embodiments.

It should be understood that, the system, devices and method disclosed in several embodiments provided by the present disclosure can be realized in any other manner. For example, the device embodiments described above can be merely exemplary, for example, the units are just divided according to logic functions. In practical implementation, the units can be divided in other manners, for example, multiple units or components can be combined or integrated into another system, or some features can be omitted or not executed. In addition, the mutual coupling or direct coupling or communication connection described or discussed can be via some interfaces, and indirect coupling or communication connection between devices or units may be electrical, mechanical or of other forms.

The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure.

In addition, respective functional units in respective embodiments of the present disclosure can be integrated into one processing unit, or can be present as separate physical entities. It is also possible that two or more than two units are integrated into one unit.

If the functions are realized in form of functional software units and are sold or used as separate products, they can be stored in a computer readable storage medium. Based on this understanding, the parts of the technical solutions or the essential parts of the technical solutions (i.e. the parts making a contribution to the related art) can be embodied in form of software product, which is stored in a storage medium, and includes several instruction used for causing a computer device (for example, a personal computer, a server or a network device) to execute all or part of steps in the methods described in respective embodiments of the present disclosure. The above storage medium may be any medium capable of storing program codes, including a USB flash disk, a mobile hard disk, a Read-Only Memory (ROM), a Random Access Memory (RAM), a disc, or a light disk.

It should be understood that all or a part of the method provided by the present disclosure may be realized by programs instructing relative hardware, the programs may be stored in a computer-readable memory. The memory may include a flash disk, an ROM, an RAM, a magnet disk, a light disk and the like.

The forgoing description is only directed to preferred embodiments of the present disclosure, but not used to limit the present disclosure. All modifications, equivalents, variants and improvements made within the spirit and principle of the present disclosure shall fall within the protection scope of the present disclosure. Thus, the protection scope of the present disclosure shall be limited by the protection scope of the claims.

## Claims

1. An electronic device (100), comprising a processor (110), a touch display screen (120) and a fingerprint recognition apparatus (130), wherein a fingerprint recognition region of the fingerprint recognition apparatus (130) comprises the entire touch display screen (120), and
the touch display screen (120) is configured to detect a vertical distance between a touch end and the touch display screen (120);
the touch display screen (120) is further configured to determine a vertical projection point of the touch end on the touch display screen (120) and send the vertical projection point to the processor (110) when it is determined that the vertical distance is less than or equal to a preset distance threshold;
the processor (110) is configured to determine a target region corresponding to the vertical projection point on the touch display screen (120); and
the processor (110) is further configured to enable a fingerprint recognition function of the fingerprint recognition apparatus (130) in the target region.

2. The electronic device (100) according to claim 1, wherein the processor (110) is further configured to highlight the target region.

3. The electronic device (100) according to claim 1 or 2, wherein the processor (110) is configured to:
determine the vertical projection point of the touch end on the touch display screen (120) when a period in which the vertical distance between the touch end and the touch display screen (120) is maintained less than or equal to the preset distance threshold is greater than or equal to a preset period.

4. The electronic device (100) according to claim 2 or 3, wherein the processor (110) is configured to:
acquire first brightness of the touch display screen (120); and set brightness of the target region as second brightness according to the first brightness, in which the second brightness is brighter than the first brightness, and the target region having the second brightness is configured to guide a user to input the fingerprint.

5. The electronic device (100) according to any of claims 2-4, wherein the processor (110) is configured to:
display a man-machine interface in the target region, in which the man-machine interface is configured to guide the user to input the fingerprint in the target region.

6. The electronic device (100) according to any of claims 1-5, wherein,
the fingerprint recognition apparatus (130) is configured to collect fingerprint data and to send the fingerprint data to the processor (110); and
the processor (110) is further configured to perform a matching between the fingerprint data collected and pre-stored fingerprint template data, and to perform a preset operation when the collected fingerprint data matches with the pre-stored fingerprint template data.

7. A fingerprint recognition control method, applied to an electronic device comprising a touch display screen and a fingerprint recognition apparatus, wherein a fingerprint recognition region of the fingerprint recognition apparatus comprises the entire touch display screen, and the method comprises:
detecting a vertical distance between a touch end and the touch display screen (201; 301);
when it is determined that the vertical distance is less than or equal to a preset distance threshold, determining a vertical projection point of the touch end on the touch display screen (202);
determining a target region corresponding to the vertical projection point on the touch display screen (203; 303); and
enabling a fingerprint recognition function of the fingerprint recognition apparatus in the target region (204; 304).

8. The method according to claim 7, further comprising:
highlighting the target region (305).

9. The method according to claim 7 or 8, wherein determining the vertical projection point of the touch end on the touch display screen (202) comprises:
when a period in which the vertical distance between the touch end and the touch display screen is maintained less than or equal to the preset distance threshold is greater than or equal to a preset period, determining the vertical projection point of the touch end on the touch display screen (302).

10. The method according to claim 8 or 9, wherein highlighting the target region (305) comprises:
acquiring first brightness of the touch display screen; and
setting brightness of the target region as second brightness according to the first brightness, in which the second brightness is brighter than the first brightness, and the target region having the second brightness is configured to guide a user to input the fingerprint.

11. The method according to any of claims 8-10, wherein highlighting the target region (305) comprises:
displaying a man-machine interface in the target region, in which the man-machine interface is configured to guide the user to input the fingerprint in the target region.

12. The method according to any of claims 7-11, further comprising:
controlling the fingerprint recognition apparatus to collect fingerprint data (306);
performing a matching between the fingerprint data collected and pre-stored fingerprint template data, and performing a preset operation when the collected fingerprint data matches with the pre-stored fingerprint template data (307).
